# EUROPÄISCHE PATENTSCHRIFT

(11) **EP 1 298 163 B1**
(45) Veröffentlichungstag und Bekanntmachung des Hinweises auf die Patenterteilung: **06.07.2005**
(21) Anmeldenummer: 02019344.7
(22) Anmeldetag: 29.08.2002
(51) Int. Cl.: C08K 5/00, C07F 7/18, C08K 5/54

(54) **Geblockte Mercaptosilane, Verfahren zu deren Herstellung und die enthaltenden Kautschukmischungen**
Blocked mercaptosilanes, process for their preparation and rubber compositions containing them
Mercaptosilanes bloqués, leur préparation et compositions de caoutchouc les contentant

(30) Priorität: 26.09.2001 DE 10147520; 22.12.2001 DE 10163945
(43) Veröffentlichungstag der Anmeldung: 02.04.2003
(73) Patentinhaber: Degussa AG, 40474 Düsseldorf (DE)
(72) Erfinder: Luginsland, Hans-Detlef, Dr., 50968 Köln (DE); Krafczyk, Roland, Dr., 79618 Rheinfelden (DE); Forster, Frank, Dr., 63825 Schöllkrippen (DE)

(56) Entgegenhaltungen:
- WO-A-02/48256
- WO-A-99/09036
- DE-A- 3 813 678
- ITO ET AL: "epoxy resin potting compositions for semiconductor devices" CHEMICAL ABSTRACTS, AMERICAN CHEMICAL SOCIETY. COLUMBUS, US, Bd. 10, Nr. 111, 4. September 1989 (1989-09-04), XP002084435 ISSN: 0009-2258 & JP 63 248821 A (SHIN-ETSU CHEMICAL INDUSTRY CO. LTD.) 17. Oktober 1988 (1988-10-17)

## Beschreibung

Die Erfindung betrifft geblockte Mercaptosilane, ein Verfahren zu ihrer Herstellung sowie ihre Verwendung.

Aus WO 99/09036 sind geblockte Mercaptosilane der Formel [[(ROC(=O))ₚ-(G)ⱼ]ₖ-Y-S]ᵣ-G-(SiX₃)ₛ und [(X₃Si)_{q}-G]ₐ-[Y-[S-G-SiX₃]_{b}]_{c} bekannt.

Ferner ist aus US 6,127,468 ein Verfahren zur Herstellung von gefülltem Kautschuk bekannt, wobei Kautschuk, ein geblocktes Mercaptosilan und ein anorganischer Füllstoff gemischt wird, ein Deblockierungsagenz der Formel R₂NC(=S)-Sₙ-C(=S)NR₂ zu der Mischung gegeben wird und die Mischung vulkanisiert wird.

Des weiteren sind Epoxidharzmischungen für Halbleiter bekannt (ITO et al., "Epoxy resin potting compositions for semiconductor devices", Chemical Abstracts, Bd. 10, Nr. 111), die unter anderem Reaktionsprodukte aus C>10 Fettsäuren, Alkoholen, Estern und deren Derivate und Hydroxi-, Methoxy-, Ethoxy-, Propoxy- oder Acryloxy-Gruppen enthaltenden Silane enthalten.

Aus DE 38 13 678 sind Kautschuckmischungen für Reifen bekannt, die Kautschuk, Ruß ggf. Silikat und
Kupplungsmittel der Formel
Y₃-Si-CₙH₂ₙSₘCₙH₂ₙSiY₃, Y₃-SiCₙH₂ₙX oder
Y₃-SiCₙH₂ₙSₘX' enthalten.

Nachteile der bekannten geblockten Mercaptosilane sind die niedrige Verstärkungswirkung und schlechte Verarbeitbarkeit.

Aufgabe der vorliegenden Erfindung ist es ein geblocktes Mercaptosilan zu entwickeln, das preiswert hergestellt werden kann, einen hohen Spannungswert und Verstärkungsfaktor sowie gute Verarbeitbarkeit und dynamische Eigenschaften besitzt.

Gegenstand der Erfindung sind geblockte Mercaptosilane, welche dadurch gekennzeichnet sind, daß sie der allgemeinen
Formel I

(R¹O)₃Si-R²-S-C(=O)-C₁₇H₃₅ (I)

entsprechen, wobei
R¹ Ethyl,
R² ein linear oder verzweigter, gesättigter oder ungesättigter (C₁-C₈) zweibindiger Kohlenwasserstoff, vorzugsweise CH₂, CH₂CH₂, CH₂CH₂CH₂, CH₂CH₂CH₂CH₂, CH(CH₃), CH₂CH(CH₃), C(CH₃)₂, CH(C₂H₅), CH₂CH₂CH(CH₃), CH₂CH(CH₃)CH₂ oder 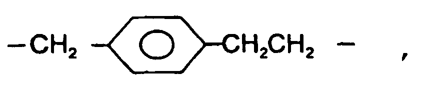 bedeutet und
die Alkylgruppe C₁₇H₃₅ verzweigt oder linear ist.

In einer besonderen Ausführungsform der Erfindung kann R¹ Ethyl, R² CH₂CH₂CH₂ und die Alkylgruppe C₁₇H₃₅ linear ((CH₂)₁₆CH₃) sein.

Beispiele für die erfindungsgemäßen geblockten Mercaptosilane gemäß Formel (I) können sein: (C₂H₅O)₃Si-CH₂-S-C(=O)-C₁₇H₃₅, (C₂H₅O)₃Si=CH₂CH₂-S-C(=O)-C₁₇H₃₅, (C₂H₅O)₃Si-CH₂CH₂CH₂-S-C(=O)-C₁₇H₃₅, (C₂H₅O)₃Si-CH₂CH₂CH₂CH₂-S-C(=O)-C₁₇H₃₅ oder (C₂H₅O)₃Si-CH₂CH₂CH₂CH₂CH₂-S-C(=O)-C₁₇H₃₅.

Ein weiterer Gegenstand der Erfindung ist ein Verfahren zur Herstellung der geblockten Mercaptosilane der allgemeinen Formel I, welches dadurch gekennzeichnet ist, daß man das entsprechende Mercaptosilan der Formel (R¹O)₃Si-R²-SH mit Stearinsäurechlorid in Gegenwart einer Hilfsbase in einem geeigneten organischen Lösungsmittel umsetzt, zur Vervollständigung der Reaktion die Mischung zum Sieden erhitzt, vom entstandenen festen Rückstand abfiltriert und das Lösungsmittel abdestilliert.

Beispiele für die Mercaptosilane der Formel (R¹O)₃Si-R²-SH können sein:
(C₂H₅O)₃Si-CH₂-SH, (C₂H₅O)₃Si-CH₂CH₂-SH, (C₂H₅O)₃Si-CH₂CH₂CH₂-SH, (C₂H₅O)₃Si-CH₂CH₂CH₂CH₂-SH oder (C₂H₅O)₃Si-CH₂CH₂CH₂CH₂CH₂-SH.

Als Hilfsbase kann man Triethylamin oder andere Amine verwenden.

Als organisches Lösungsmittel kann man Alkane verwenden.

Die erfindungsgemäßen geblockten Mercaptosilane eignen sich besonders gut für die Verwendung in Kautschukmischungen.

Ein weiterer Gegenstand der Erfindung sind Kautschukmischungen, enthaltend Kautschuk, Füllstoff, vorzugsweise gefällte Kieselsäure, und gegebenenfalls weitere Kautschukhilfsmittel, sowie mindestens ein erfindungsgemäßes geblocktes Mercaptosilan der Formel I in einer Menge von 0,1 bis 15 Gew-%, bevorzugt 5-10 Gew.%, bezogen auf die Menge des eingesetzten oxidischen Füllstoffs, und gegebenenfalls ein Deblockierungsagenz.

Die Zugabe der erfindungsgemäßen geblockten Mercaptosilane sowie die Zugabe der Füllstoffe kann bevorzugt bei Massetemperaturen von 100 bis 200 °C erfolgen, sie kann jedoch auch später bei tieferen Temperaturen (40 bis 100 °C), zum Beispiel zusammen mit weiteren Kautschukhilfsmitteln, erfolgen.

Das erfindungsgemäße geblockte Mercaptosilan kann sowohl in reiner Form als auch aufgezogen auf einen inerten organischen oder anorganischen Träger dem Mischprozeß zugegeben werden. Bevorzugte Trägermaterialien können Kieselsäuren, natürliche oder synthetische Silikate, Wachse, Thermoplaste, Aluminiumoxid oder Ruße sein.

Als Füllstoffe können für die erfindungsgemäßen Kautschukmischungen eingesetzt werden:
- Ruße: Die hierbei zu verwendenden Ruße sind nach dem Flammruß-, Furnace- oder Gasruß-Verfahren hergestellt und besitzen BET-Oberflächen von 20 bis 200 m²/g. Die Ruße können gegebenenfalls auch Heteroatome wie zum Beispiel Si enthalten.
- hochdisperse Kieselsäuren, hergestellt zum Beispiel durch Fällung von Lösungen von Silikaten oder Flammenpyrolyse von Siliciumhalogeniden mit spezifischen Oberflächen von 5 bis 1000, vorzugsweise 20 bis 400 m²/g (BET-Oberfläche) und mit Primärteilchengrößen von 10 bis 400 nm. Die Kieselsäuren können gegebenenfalls auch als Mischoxide mit anderen Metalloxiden, wie Al-, Mg-, Ca-, Ba-, Zn- und Titanoxiden vorliegen.
- Synthetische Silikate, wie Aluminiumsilikat, Erdalkalisilikate wie Magnesiumsilikat oder - Calciumsilikat, mit BET-Oberflächen von 20 bis 400 m²/g und Primärteilchendurchmessern von 10 bis 400 nm.
- Synthetische oder natürliche Aluminium-oxide und - hydroxide
- Natürliche Silikate, wie Kaolin und andere natürlich vorkommende Kieselsäuren.
- Glasfasern und Glasfaserprodukte (Matten, Stränge) oder Mikroglaskugeln.

Bevorzugt können Ruße mit BET-Oberflächen von 20 bis 400 m²/g oder hochdisperse Kieselsäuren, hergestellt durch Fällung von Lösungen von Silikaten, mit BET-Oberflächen von 20 bis 400 m²/g in Mengen von 5 bis 150 Gew.-Teilen, jeweils bezogen auf 100 Teile Kautschuk, eingesetzt werden.

Die genannten Füllstoffe können alleine oder im Gemisch eingesetzt werden. In einer besonders bevorzugten Ausführung des Verfahrens können 10 bis 150 Gew.-Teile helle Füllstoffe, gegebenenfalls zusammen mit 0 bis 100 Gew.-Teilen Ruß, sowie 0,1 bis 15 Gew.-Teile, bevorzugt 5 bis 10 Gew.-Teile, einer Verbindung der Formel (I), jeweils bezogen auf 100 Gew.-Teile des eingesetzten Füllstoffs, zur Herstellung der Mischungen eingesetzt werden.

Für die Herstellung erfindungsgemäßer Kautschukmischungen eignen sich neben Naturkautschuk auch Synthesekautschuke. Bevorzugte Synthesekautschuke sind beispielsweise bei W.

Hofmann, Kautschuktechnologie, Genter Verlag, Stuttgart 1980, beschrieben. Sie umfassen unter anderem
- Polybutadien (BR),
- Polyisopren (IR),
- Styrol/Butadien-Copolymerisate mit Styrolgehalten von 1 bis 60, vorzugsweise 2 bis 50 Gew.-% (SBR),
- Isobutylen/Isopren-Copolymerisate (IIR),
- Butadien/Acrylnitril-Copolymere mit Acrylnitrilgehalten von 5 bis 60, vorzugsweise 10 bis 50 Gew.-% (NBR),
- teilhydrierter oder vollständig hydrierter NBR-Kautschuk (HNBR),
- Ethylen/Propylen/Dien-Copolymerisate (EPDM),
sowie Mischungen dieser Kautschuke. Für die Herstellung von Kfz-Reifen sind insbesondere anionisch polymerisierte L-SBR-Kautschuke (Lösungs-SBR) mit einer Glastemperatur oberhalb von -50 °C sowie deren Mischungen mit Dienkautschuken von Interesse.

Als Deblockierungsagenz können tertiäre Amine, Lewissäuren, Thiole oder Nukleophile, beispielsweise primäres, sekundäres oder C=N enthaltendes Amin, verwendet werden. Beispiele für Deblockierungsagenz können sein R₂NC(=S)-Sₙ-C(=S)NR₂, wobei n=1-4 und R ein C₁-C₄-Alkylgruppe ist, N,N'-Diphenylguanidin, N,N',N"-Triphenylguanidin, N,N'-Di-ortho-tolylguanidin, Ortho-biguanidin, Hexamethylentetramin, Cyclohexylethylamin, Dibutylamin, Thiuram und 4,4'-Diaminodiphenylmethan.

Die erfindungsgemäßen Kautschukmischungen können weitere Kautschukhilfsprodukte enthalten, wie Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Wachse, Streckmittel, organische Säuren, Verzögerer, Metalloxide sowie Aktivatoren, wie Triethanolamin, Polyethylenglykol, Hexantriol, die der Kautschukindustrie bekannt sind.

Die Kautschukhilfsmittel können in üblichen Mengen, die sich unter anderem nach dem Verwendungszweck richten, eingesetzt werden. Übliche Mengen sind zum Beispiel Mengen von 0,1 bis 50 Gew.-%, bezogen auf Kautschuk. Das geblockte Mercaptosilan kann alleine als Vernetzer dienen. In der Regel empfiehlt sich die Zugabe von weiteren Vernetzern. Als weitere bekannte Vernetzer können Schwefel oder Peroxide eingesetzt werden. Die erfindungsgemäßen Kautschukmischungen können darüber hinaus Vulkanisationsbeschleuniger enthalten. Beispiele für geeignete Vulkanisationsbeschleuniger sind Mercaptobenzthiazole, Sulfenamide, Guanidine, Thiurame, Dithiocarbamate, Thioharnstoffe und Thiocarbonate. Die Vulkanisationsbeschleuniger und Schwefel oder Peroxide werden in Mengen von 0,1 bis 10 Gew.-%, bevorzugt 0,1 bis 5 Gew.-%, bezogen auf Kautschuk, eingesetzt.

Die Vulkanisation der erfindungsgemäßen Kautschukmischungen kann bei Temperaturen von 100 bis 200 °C, bevorzugt 130 bis 180 °C, gegebenenfalls unter Druck von 10 bis 200 bar erfolgen.

Der Kautschuk oder die Mischung von Kautschuken, der Füllstoff, gegebenenfalls Kautschukhilfsmitteln, das erfindungsgemäße geblockte Mercaptosilan und gegebenenfalls das Deblockierungsagenz kann in Mischaggregaten, wie Walzen, Innenmischern und Mischextrudern, gemischt werden. Die erfindungsgemäßen Kautschukvulkanisate eignen sich zur Herstellung von Formkörpern, zum Beispiel für die Herstellung von Luftreifen, Reifenlaufflächen, Kabelmänteln, Schläuchen, Treibriemen, Förderbändern, Walzenbelägen, Reifen, Schuhsohlen, Dichtungsringen und Dämpfungselementen.

Bei der Verwendung der erfindungsgemäßen geblockten Mercaptosilane in Kautschukmischungen zeigen sich gegenüber den Mischungen nach dem Stand der Technik Vorteile in der erhöhten Verstärkungswirkung, niedrigeren Mischungsviskosität und besseren Verarbeitbarkeit.

### Beispiele 1-4 Herstellung der geblockten Mercaptosilane

### Beispiel 1 (Vergleichsbeispiel)

### Darstellung von (EtO)₃Si-(CH₂)₃-S-C(=O)-C₈H₁₇

Zu einer Lösung aus 118,39 g 3-Mercaptopropyltriethoxysilan in 820 ml Petrolether (Siedebereich 50-70 °C) werden nach Zugabe von 57,78 g Triethylamin bei 5 °C 87,73 g Pelargonsäurechlorid getropft. Nach 90 min. Erhitzen am Rückfluss wird die erkaltete Suspension filtriert, der Filterkuchen zweimal mit Petrolether nachgewaschen und die erhaltenen Filtrate vereinigt und das Lösungsmittel entfernt. Man erhält 187,74 g flüssiges Produkt, dessen Identität mittels ¹H-NMR Spektroskopie bestätigt wird.

### Beispiel 2 (Vergleichsbeispiel)

### Darstellung von (EtO)₃Si-(CH₂)₃-S-C(=O)-C₁₅H₃₁

Zu einer Lösung aus 98,66 g 3-Mercaptopropyltriethoxysilan in 1300 ml Petrolether (Siedebereich 50-70 °C) werden nach Zugabe von 48,15 g Triethylamin bei 8 °C 113,75 g Palmitinsäurechlorid getropft. Nach 60 min. Erhitzen am Rückfluss wird die erkaltete Suspension filtriert, der Filterkuchen zweimal mit Petrolether nachgewaschen und die erhaltenen Filtrate vereinigt und das Lösungsmittel entfernt. Man erhält 183,30 g flüssiges Produkt, dessen Identität mittels ¹H-NMR Spektroskopie bestätigt wird.

### Beispiel 3

### Darstellung von (EtO)₃Si-(CH₂)₃-S-C(=O)-C₁₇H₃₅

Zu einer Lösung aus 98,66 g 3-Mercaptopropyltriethoxysilan in 1300 ml Petrolether (Siedebereich 50-70 °C) werden nach Zugabe von 48,15 g Triethylamin bei 5 °C 125,35 g Stearinsäurechlorid mittels beheizbarem Tropftrichter getropft. Nach 90 min. Erhitzen am Rückfluss wird die erkaltete Suspension filtriert, der Filterkuchen zweimal mit Petrolether nachgewaschen und die erhaltenen Filtrate vereinigt und das Lösungsmittel entfernt. Man erhält 186,71 g flüssiges Produkt, dessen Identität mittels ¹H-NMR Spektroskopie bestätigt wird.

### Beispiel 4 (Vergleichsbeispiel)

### Darstellung von (EtO)₃Si-(CH₂)₃-S-C(=O)-C₂₁H₄₃

Zu einer Lösung aus 98,66 g 3-Mercaptopropyltriethoxysilan in 1300 ml Petrolether (Siedebereich 50-70 °C) werden nach Zugabe von 48,15 g Triethylamin bei 5 °C 148,57 g Behensäurechlorid mittels Feststoffdosierer gegeben. Nach 90 min. Erhitzen am Rückfluss wird die erkaltete Suspension filtriert, der Filterkuchen zweimal mit Petrolether nachgewaschen und die erhaltenen Filtrate vereinigt und das Lösungsmittel entfernt. Man erhält 213,55 g niedrigschmelzendes Produkt, dessen Identität mittels ¹H-NMR Spektroskopie bestätigt wird.

### Beispiele 5-9: Gummitechnische Prüfung

Die für die Kautschukmischungen verwendete allgemeine Rezeptur ist in folgender Tabelle 1 angegeben. Dabei bedeutet die Einheit phr Gewichtsanteile, bezogen auf 100 Teile des eingesetzten Rohkautschuks.

Die Silane werden in den Beispielen 5-9 äquimolar dosiert.

**Tabelle 1**

| Substanz | Beispiel 5 | Beispiel 6 | Beispiel 7 | Beispiel 8 | Beispiel 9 |
|---|---|---|---|---|---|
| 1. Stufe | [phr] | [phr] | [phr] | [phr] | [phr] |
| Buna VSL 4515-0 | 75,0 | 75,0 | 75,0 | 75,0 | 75,0 |
| Buna CB 24 | 25,0 | 25,0 | 25,0 | 25,0 | 25,0 |
| Ultrasil 7000 GR | 80,0 | 80,0 | 80,0 | 80,0 | 80,0 |
| Si 69 | 7,0 | - | - | - | - |
| Silan Beispiel 1 | - | 9,95 | - | - | - |
| Silan Beispiel 2 | - | - | 12,53 | - | - |
| Silan Beispiel 3 | - | - | - | 13,26 | - |
| Silan Beispiel 4 | - | - | - | - | 14,74 |
| ZnO | 2,5 | 2,5 | 2,5 | 2,5 | 2,5 |
| Stearinsäure | 1,0 | 1,0 | 1,0 | 1,0 | 1,0 |
| Naftolen ZD | 32,5 | 32,5 | 32,5 | 32,5 | 32,5 |
| Vulkanox 4020 | 2,0 | 2,0 | 2,0 | 2,0 | 2,0 |
| Protector G35P | 1,5 | 1,5 | 1,5 | 1,5 | 1,5 |

| 3. Stufe | | | | | |
|---|---|---|---|---|---|
| Batch Stufe 2 DPG | 2,0 | 2,0 | 2,0 | 2,0 | 2,0 |
| CBS | 1,7 | 1,7 | 1,7 | 1,7 | 1,7 |
| Schwefel | 2,2 | 2,2 | 2,2 | 2,2 | 2,2 |

Bei dem Polymer VSL 4515-0 handelt es sich um ein in Lösung polymerisiertes SBR-Copolymer der Bayer AG mit einem Styrolgehalt von 15 Gew.-% und einem Butadiengehalt von 85 Gew.-%. Von dem Butadien sind 45 % der Monomereinheiten 1,2 verknüpft.

Bei dem Polymer Buna CB 24 handelt es sich um ein cis 1,4 Polybutadien der Bayer AG mit cis 1,4-Gehalt von mindestens 96 % und einer Mooney-Viskosität zwischen 44 und 50.

Ultrasil 7000 GR ist eine Kieselsäure der Degussa AG mit einer BET-Oberfläche von 170 m²/g.

Si 69 ist Bis(3-triethoxysilylpropyl)tetrasulfan der Firma Degussa AG.

Als aromatisches Öl wird Naftolen ZD der Chemetall verwendet. Bei Vulkanox 4020 handelt es sich um PPD der Bayer AG. Protektor G35P ist ein Ozonschutzwachs der HB-Fuller GmbH. Vulkacit D (DPG) und Vulkacit CZ (CBS) sind Handelsprodukte der Bayer AG.

Die Kautschukmischung wird dreistufig in einem Innenmischer entsprechend der Angaben in der Tabelle 2 hergestellt:

**Tabelle 2**

| **Stufe 1** | |
|---|---|
| **Einstellungen** | |
| Mischaggregat | Werner & Pfleiderer GK 1.5E |
| Friktion | 1:1 |
| Drehzahl | 70 min⁻¹ |
| Stempeldruck | 5,5 bar |
| Leervolumen | 1,58 L |
| Füllgrad | 0,55 |
| Durchflußtemperatur | 70 °C |

| **Mischvorgang** | |
|---|---|
| 0 bis 1 min | Polymer |
| 1 bis 3 min | 1/2 Kieselsäure, Ruß, ZnO, Stearinsäure, Silan, Öl |
| 3 bis 4 min | 1/2 Kieselsäure, Alterungsschutz |
| 4 min | säubern |
| 4 bis 5 min | mischen |
| 5 min | säubern |
| 5 bis 6 min | mischen und ausfahren |
| Lagerung | 24 h bei Raumtemperatur |

| **Stufe 2** | |
|---|---|
| **Einstellungen** | |
| Mischaggregat | wie in Stufe 1 bis auf |
| Drehzahl | variabel |
| Füllgrad | 0,51 |
| Durchflußtemperatur | 80 °C |

| **Mischvorgang** | |
|---|---|
| 0 bis 2 min | Batch Stufe 1 |
| 2 bis 5 min | mischen bei 145° bis 155°C |
| 5 min | ausfahren |
| | und auf Labormischwalzwerk Fell bilden |
| | (Durchmesser 200 mm, Länge 450 mm, Durchflußtemperatur 50 °C) |
| | anschließend ein Fell ausziehen |
| Batch-Temperatur | 100-110 °C |

| | **Stufe 3** |
|---|---|
| **Einstellungen** | |
| Mischaggregat | wie in Stufe 2 bis auf |
| Drehzahl | 40 min⁻¹ |
| Füllgrad | 0,49 |
| Durchflußtemperatur | 50 °C |

| **Mischvorgang** | |
|---|---|
| 0 bis 2 min | Batch Stufe 2, Schwefel, Beschleuniger |
| 2 min | ausfahren |
| | und auf Labormischwalzwerk homogenisieren (Durchmesser 200 mm, Länge 450 mm, Durchflußtemperatur 50 °C) |
| | 3*links, 3*rechts einschneiden, |
| | 8*weit, 3*eng stürzen anschließend ein Fell ausziehen |

Die Vulkanisationszeit für die Prüfkörper beträgt 20 Minuten bei 165 °C.

Die gummitechnische Prüfung erfolgt gemäß den in Tabelle 3 angegebenen Prüfmethoden.

**Tabelle 3**

| Physikalische Testung | Norm/ Bedingungen |
|---|---|
| ML 1+4, 100 °C | DIN 53523/3, ISO 667 |
| Vulkameterprüfung, 165 °C | DIN 53529/3, ISO 6502 |
| Zugversuch am Ring, 23 °C | DIN 53504, ISO 37 |
| Zugfestigkeit | |
| Spannungswerte | |
| Bruchdehnung | |
| Shore-A-Härte, 23 °C | DIN 53 505 |
| Ball-Rebound, 0 und 60 °C | ASTM D 5308 |
| Viskoelastische Eigenschaften, 0 und 60 °C, 16 Hz, 50 N Vorkraft und 25 N Amplitudenkraft | DIN 53 513, ISO 2856 |
| Komplexer Modul E*, | |
| Verlustfaktor tan δ | |
| Goodrich-Flexometer, 25 min bei 23 °C und 0.175 inch Hub | DIN 53 533, ASTM D 623 A |
| DIN-Abrieb, 10 N Kraft | DIN 53 516 |
| Druckverformungsrest DVR, 22 h bei 70 °C | DIN 53 517, ISO 815 |
| Dispersion | ISO/DIS 11345 |

Die folgenden gummitechnischen Daten für Rohmischung und Vulkanisat werden ermittelt (Tabelle 4):

**Tabelle 4**

| **Rohmischungsergebnisse** | | | | | | |
|---|---|---|---|---|---|---|
| Merkmal: | Einheit | Beispiel 5 | Beispiel 6 | Beispiel 7 | Beispiel 8 | Beispiel 9 |
| **Hitec 165°C** | | | | | | |
| Dmax-Dmin | [dNm] | 6,6 | 6,9 | 6,2 | 5,9 | 5,5 |
| t 10% | [min] | 5,5 | 5,3 | 5,4 | 5,2 | 6,4 |
| t 90% | [min] | 10,8 | 8,3 | 8,3 | 8,9 | 10,0 |
| ML 1+4 100°C 3.Stufe | [ME] | 53 | 35 | 32 | 33 | 32 |

| **Vulkanisatergebnisse** | | | | | | |
|---|---|---|---|---|---|---|
| Merkmal: | Einheit | Beispiel 5 | Beispiel 6 | Beispiel 7 | Beispiel 8 | Beispiel 9 |
| **Zugversuch am Ring** | | | | | | |
| Zugfestigkeit | [MPa] | 14,7 | 13,8 | 13,6 | 13,9 | 13,7 |
| Spannungswert 100% | [MPa] | 1,9 | 1,9 | 1,7 | 1,7 | 1,5 |
| Spannungswert 300% | [MPa] | 10,1 | 9,5 | 7,7 | 8,1 | 6,6 |
| Bruchdehnung | [%] | 380 | 390 | 440 | 430 | 500 |
| Spannungswert 300%/100% | [-] | 5,3 | 5,0 | 4,5 | 4,8 | 4,4 |
| Shore-A-Härte (23 °C) | [SH] | 64 | 60 | 58 | 58 | 57 |
| Ball Rebound 60°C | [%] | 60,1 | 58,9 | 61,1 | 60,3 | 60,4 |
| DIN-Abrieb | [mm³] | 62 | 76 | 93 | 89 | 103 |
| Goodrich-Flexometer, 0,175inch, 25Min., 23°C | | | | | | |
| Kontakttemperatur | [°C] | 48 | 44 | 43 | 44 | 44 |
| Einstichtemperatur | [°C] | 95 | 84 | 82 | 85 | 84 |
| Permanent Set | [%] | 2,9 | 2,0 | 1,4 | 1,5 | 1,4 |
| MTS, 16Hz, 50N +/- 25N | | | | | | |
| E*, 0°C | [MPa] | 15,1 | 12,4 | 12,6 | 10,3 | 15,7 |
| E*, 60°C | [MPa] | 7,5 | 7,7 | 7,2 | 6,7 | 6,9 |
| Verlustfaktor tanδ,0°C | [-] | 0,329 | 0,278 | 0,278 | 0,270 | 0,320 |
| Verlustfaktor tanδ,60°C | [-] | 0,148 | 0,123 | 0,127 | 0,129 | 0,134 |
| Dispersion Phillips | [-] | 8 | 8 | 8 | 9 | 7 |

Wie die Tabelle 4 zeigt, ergibt das erfindungsgemäße Silan in Beispiel 8 bei äquimolarer Dosierung den niedrigsten E*(0°C)-Wert, was auf verbesserte Wintereigenschaften in Reifenlaufflächen schließen läßt. Des weiteren hat die Mischung 8 den besten Dispersionswert und zeichnet sich gegenüber den Mischungen 7 und 9 durch einen hohen Modulwert aus.

### Beispiele 10-14: Gummitechnische Prüfung

Die für die Kautschukmischungen verwendete allgemeine Rezeptur ist in folgender Tabelle 5 angegeben. Dabei bedeutet die Einheit phr Gewichtsanteile, bezogen auf 100 Teile des eingesetzten Rohkautschuks.

**Tabelle 5**

| Substanz | Beispiel 10 | Beispiel 11 | Beispiel 12 | Beispiel 13 | Beispiel 14 |
|---|---|---|---|---|---|
| 1. Stufe | [phr] | [phr] | [phr] | [phr] | [phr] |
| Buna VSL 4515-0 | 75,0 | 75,0 | 75,0 | 75,0 | 75,0 |
| Buna CB 24 | 25,0 | 25,0 | 25,0 | 25,0 | 25,0 |
| Ultrasil 7000 GR | 80,0 | 80,0 | 80,0 | 80,0 | 80,0 |
| Si 69 | 7,0 | - | - | - | - |
| Silan Beispiel 1 | - | 7,0 | - | - | - |
| Silan Beispiel 2 | - | - | 7,0 | - | - |
| Silan Beispiel 3 | - | - | - | 7,0 | - |
| Silan Beispiel 4 | - | - | - | - | 7,0 |
| ZnO | 2,5 | 2,5 | 2,5 | 2,5 | 2,5 |
| Stearinsäure | 1,0 | 1,0 | 1,0 | 1,0 | 1,0 |
| Naftolen ZD | 32,5 | 32,5 | 32,5 | 32,5 | 32,5 |
| Vulkanox 4020 | 2,0 | 2,0 | 2,0 | 2,0 | 2,0 |
| Protector G35P | 1,5 | 1,5 | 1,5 | 1,5 | 1,5 |

| 3. Stufe | | | | | |
|---|---|---|---|---|---|
| Batch Stufe 2 DPG | 2,0 | 2,0 | 2,0 | 2,0 | 2,0 |
| CBS | 1,7 | 1,7 | 1,7 | 1,7 | 1,7 |
| Schwefel | 2,2 | 2,2 | 2,2 | 2,2 | 2,2 |

Die Silane werden in den Beispielen 10-14 gewichtsgleich dosiert.

Die Kautschukmischung wird dreistufig in einem Innenmischer entsprechend der Angaben in der Tabelle 2 hergestellt und 20 min bei 165°C vulkanisiert.

Die gummitechnische Prüfung erfolgt gemäß den in Tabelle 3 angegebenen Prüfmethoden.

Die folgenden gummitechnischen Daten für Rohmischung und Vulkanisat werden ermittelt (Tabelle 6):

**Tabelle 6**

| **Rohmischungsergebnisse** | | | | | | |
|---|---|---|---|---|---|---|
| Merkmal: | Einheit | Beispiel 10 | Beispiel 11 | Beispiel 12 | Beispiel 13 | Beispiel 14 |
| **Hitec 165°C** | | | | | | |
| Dmax-Dmin | [dNm] | 6,6 | 6,6 | 6,5 | 6,4 | 6,3 |
| t 10% | [min] | 5,5 | 5,7 | 5,6 | 5,2 | 5,5 |
| t 90% | [min] | 10,8 | 11,9 | 17,8 | 17,5 | 18,4 |
| ML 1+4 100°C 3.Stufe | [ME] | 53 | 39 | 39 | 40 | 38 |

| **Vulkanisatergebnisse** | | | | | | |
|---|---|---|---|---|---|---|
| Merkmal: | Einheit | Beispiel 10 | Beispiel 11 | Beispiel 12 | Beispiel 13 | Beispiel 14 |
| **Zugversuch am Ring** | | | | | | |
| Zugfestigkeit | [MPa] | 14,7 | 13,4 | 14,4 | 14,2 | 13,8 |
| Spannungswert 100% | [MPa] | 1,9 | 1,9 | 2,2 | 2,1 | 2,1 |
| Spannungswert 300% | [MPa] | 10,1 | 9,6 | 11,1 | 11,2 | 10,2 |
| Bruchdehnung | [%] | 380 | 370 | 350 | 350 | 370 |
| Spannungswert 300%/100% | [-] | 5,3 | 5,1 | 5,0 | 5,3 | 4,9 |
| Shore-A-Härte (23 °C) | [SH] | 64 | 60 | 61 | 61 | 62 |
| Ball Rebound 60°C | [%] | 60,1 | 60,5 | 62,0 | 62,6 | 60,5 |
| DIN-Abrieb | [mm³] | 62 | 71 | 55 | 57 | 63 |
| Goodrich-Flexometer, 0,175inch,25Min.,23°C | | | | | | |
| Kontakttemperatur | [°C] | 48 | 45 | 47 | 45 | 46 |
| Einstichtemperatur | [°C] | 95 | 85 | 90 | 87 | 89 |
| Permanent Set | [%] | 2,9 | 1,8 | 1,5 | 1,4 | 1,6 |
| MTS, 16Hz, 50N +/- 25N | | | | | | |
| E*, 0°C | [MPa] | 15,1 | 12,4 | 13,1 | 15,7 | 12,5 |
| E*, 60°C | [MPa] | 7,5 | 7,5 | 7,9 | 8,4 | 7,6 |
| Verlustfaktor tanδ,0°C | [-] | 0,329 | 0,271 | 0,271 | 0,308 | 0,274 |
| Verlustfaktor tanδ,60°C | [-] | 0,148 | 0,123 | 0,119 | 0,124 | 0,119 |
| Dispersion Phillips | [-] | 8 | 8 | 8 | 8 | 7 |

Wie die Tabelle 6 zeigt, ergibt das erfindungsgemäße Silan in Beispiel 13 bei gewichtsgleicher Dosierung die kürzeste t 10%-Zeit, den größten Spannungswert 300% und den höchsten Ball Rebound 60°C-Wert, der auf einen verbesserten Rollwiderstand in Reifenlaufflächen schließen läßt. Des weiteren ist der Verstärkungsfaktor 300%/100% des erfindungsgemäßen Beispiels 13 höher als die der kürzeren beziehungsweise längeren Alkylkette enthaltenden Silane (Beispiel 11,12 und 14) und ist gleich der Si 69 Referenz. Der Verlustfaktor tanδ 0°C zeigt bei der Alkylkettenlängenvariation für das erfindungsgemäße Beispiel 13 den größten Wert, was auf ein verbessertes Naßrutschen der Reifen schließen läßt.

## Patentansprüche

1. Geblockte Mercaptosilane, **dadurch gekennzeichnet, daß** sie der allgemeinen Formel I
(R¹O)₃Si-R²-S-C(=O)-C₁₇H₃₅ (I)
entsprechen, wobei
R¹ Ethyl,
R² ein linear oder verzweigter, gesättigter oder ungesättigter (C₁-C₈) zweibindiger Kohlenwasserstoff, bedeutet und die Alkylgruppe C₁₇H₃₅ verzweigt oder linear ist.

2. Geblockte Mercaptosilane gemäß Anspruch 1, **dadurch gekennzeichnet, daß** R¹ Ethyl, R² CH₂CH₂CH₂ und die Alkylgruppe C₁₇H₃₅ linear ist.

3. Verfahren zur Herstellung der geblockten Mercaptosilane der allgemeinen Formel I nach Anspruch 1, **dadurch gekennzeichnet, daß** man das entsprechende Mercaptosilan der Formel (R¹O)₃Si-R²-SH mit Stearinsäurechlorid in Gegenwart einer Hilfsbase in einem geeigneten organischen Lösungsmittel umsetzt, zur Vervollständigung der Reaktion die Mischung zum Sieden erhitzt, vom entstandenen festen Rückstand abfiltriert und das Lösungsmittel abdestilliert.

4. Kautschukmischungen, enthaltend Kautschuk, Füllstoff und gegebenenfalls weitere Kautschukhilfsmittel, sowie mindestens ein geblocktes Mercaptosilan gemäß Anspruch 1 in einer Menge von 0,1 bis 15 Gew.-%, bezogen auf die Menge des eingesetzten oxidischen Füllstoffes, und gegebenenfalls ein Deblockierungsagenz.

5. Verfahren zur Herstellung von Kautschukmischungen nach Anspruch 4, **dadurch gekennzeichnet, daß** man den Kautschuk oder die Mischung von Kautschuken, den Füllstoff, das geblockte Mercaptosilan gemäß der Formel I und gegebenenfalls ein Deblockierungsagenz in einem Mischaggregat mischt.

6. Verwendung von geblockten Mercaptosilanen gemäß Anspruch 1 in Luftreifen, Reifenlaufflächen, Kabelmänteln, Schläuchen, Treibriemen, Förderbändern, Walzenbelägen, Reifen, Schuhsohlen, Dichtungsringen und Dämpfungselementen.

## Claims

1. Blocked mercaptosilanes, **characterised in that** they correspond to the general formula I
(R¹O)₃Si-R²-S-C(=O)-C₁₇H₃₅ (I),
wherein
R¹ represents ethyl,
R² represents a linear or branched, saturated or unsaturated (C₁-C₈) divalent hydrocarbon,
and the alkyl group C₁₇H₃₅ is branched or linear.

2. Blocked mercaptosilanes according to claim 1, **characterised in that**, R¹ is ethyl, R² is CH₂CH₂CH₂ and the alkyl group C₁₇H₃₅ is linear.

3. Process for the production of the blocked mercaptosilanes of the general formula I according to claim 1, **characterised in that** the corresponding mercaptosilane of the formula (R¹O)₃Si-R²-SH is reacted with stearoyl chloride in the presence of an auxiliary base in a suitable organic solvent, the mixture is heated to boiling point to complete the reaction, it is filtered off from the solid residue that forms and the solvent is distilled off.

4. Rubber compounds, containing rubber, filler and optionally other rubber auxiliaries, and also at least one blocked mercaptosilane according to claim 1 in a quantity of 0.1 to 15 wt.%, based on the quantity of the oxidic filler used, and optionally a deblocking agent.

5. Process for the production of rubber compounds according to claim 4, **characterised in that** the rubber or the mixture of rubbers, the filler, the blocked mercaptosilane according to formula I and optionally a deblocking agent are mixed in a mixing unit.

6. Use of blocked mercaptosilanes according to claim 1 in pneumatic tyres, tyre treads, cable sheaths, hoses, transmission belts, conveyor belts, roller coatings, tyres, shoe soles, packing rings and damping elements.

## Revendications

1. Mercaptosilanes bloqués, **caractérisés en ce qu'**
ils correspondent à la formule générale I
(R¹O)₃Si-R²-S-C(=O)-C₁₇H₃₅ (I)
R¹ représente un éthyle,
R² représente un hydrocarbure à deux liaisons, linéaires ou ramifiées, saturées ou insaturées, (en C₁ à C₈), et le groupe alkyle en C₁₇ ou C₃₅ est linéaire ou ramifié.

2. Mercaptosilanes bloqués selon la formule revendication 1,
**caractérisés en ce que**
R¹ représente l'éthyle, R² représente CH₂CH₂CH₂ et le groupe alkyle, en C₁₇ ou C₃₅ est linéaire.

3. Procédé de production des mercaptosilanes bloqués de formule générale I selon la revendication 1,
**caractérisé en ce qu'**
on fait réagir le mercaptosilane correspondant de formule (R¹O)₃Si-R²-SH avec du chlorure de l'acide stéarique en présence d'une base auxiliaire dans un solvant organique approprié,
**en ce que**
pour compléter la réaction on chauffe le mélange à ébullition, on le sépare par filtration du résidu solide apparu et
**en ce qu'**
on enlève le solvant par distillation.

4. Mélanges de caoutchoucs contenant le caoutchouc, la charge et le cas échéant d'autres adjuvants de caoutchouc, ainsi qu'au moins un mercaptosilane bloqué selon la revendication 1, en une quantité de 0,1 à 15 % en poids, par rapport à la quantité de charge contenant un ou plusieurs oxydes utilisée et le cas échéant un agent de déblocage.

5. Procédé de production de mélanges de caoutchouc selon la revendication 4,
**caractérisé en ce qu'**
on mélange le caoutchouc ou le mélange de caoutchoucs, la charge, le mercapto- silane bloqué selon la formule I et le cas échéant un agent de déblocage dans un appareil de mélange.

6. Utilisation de mercaptosilanes bloqués selon la revendication 1, dans les pneumatiques, les surfaces de roulement de pneus, les enveloppes de câbles, les tuyaux, les courroies de traction, les rubans de convoyage, les dépôts de cylindre, les pneumatiques, les semelles de chaussures, les anneaux d'étanchéité et les éléments d'isolation.
